Europäisches Patentamt

European Patent Office

Office européen des brevets

(19)

(11) Publication number: **0 108 726**
**B1**

(12) # EUROPEAN PATENT SPECIFICATION

(45) Date of publication of patent specification: **13.01.88**

(51) Int. Cl.⁴: **H 02 H 3/33**

(21) Application number: **83830187.7**

(22) Date of filing: **29.09.83**

(54) A control circuit for a differential switch.

(30) Priority: **08.10.82 IT 2367082**

(43) Date of publication of application:
**16.05.84 Bulletin 84/20**

(45) Publication of the grant of the patent:
**13.01.88 Bulletin 88/02**

(84) Designated Contracting States:
**AT BE FR GB NL**

(56) References cited:
**DE-A-2 015 415**
**DE-A-2 036 497**
**DE-A-2 424 205**
**US-A-3 852 642**
**US-A-4 077 055**
**US-A-4 316 229**

(73) Proprietor: **BASSANI TICINO S.p.A.**
**Corso di Porta Vittoria, 9**
**I-20122 Milano (IT)**

(72) Inventor: **Ballada, Romano**
**Via Pecorini 16**
**Milano (IT)**
Inventor: **Tassinari, Vitaliano**
**Via Pellizzari 32**
**Vimercate (Mi) (IT)**

(74) Representative: **La Ciura, Salvatore**
**Via Francesco Sforza 5**
**I-20122 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a control circuit for a differential switch, particularly for protecting single users against possible fault or leakage currents, which circuit is comprised of passive, inexpensive components, and is capable of responding to unidirectional (dc-components) and chopped (pulsating) leakage currents.

As is known, differential switches are utilized to protect one or more users against possible leakage currents, by acting directly upon the power network supplying the circuit of the user(s) to be protected.

The differential switches commercially available may be divided into two basic types: the electro-mechanical type, and the type utilizing electronic circuits.

The electro-mechanical type of differential switches makes use of a toroidal transformer to sense the occurence of a leakage current to earth and to directly operate an electro-mechanical relay that is capable of causing a network switch to open through a servomechanism. A disadvantage with this type of switch is that it requires a toroidal tarnsformer that must be of a rather large size to be able to transfer an adequate operating power to the relay.

It also requires use to be made of a sophisticated relay and a servomechanism capable of increasing the operating power for opening the main switch, as well as a resetting system for said relay.

All of the above, apart from a consideration of the reliability of the circuit, will inevitably have a consequential effect on the cost of this latter.

The other type of differential switch known, utilizes a toroidal transformer to sense the occurrence of a leakage current, and an electronic circuit that operates a semiconductor element effective for closing the circuit of a trip coil operating a switch. Both the electronic circuit and the trip coil require to be fed from individual power supplies that may be fed from the network or an auxiliary source.

In this case, there is no need for a largely dimensioned core, because the electronic circuit downstream of the transformer enables the signal to be amplified up to the desired levels for operation of the switch through said coil.

However, as already said, two additional power supplies are needed: one power supply for maintaining an adequate voltage on the operating coil, and the other one for providing adequate current to bias the electronic circuits. In general, the electronic circuits known are of an active type and utilize integrated circuits in order to attain the desired functional results, which increase the complexity and, thus, the cost of the device, while reducing its reliability, due to the multiplicity of functions these circuits are to perform. Reliability is also reduced in that said electronic circuits, being fed from their own power supply, obviously tend to get hot, giving lower performance thatn do practically cold circuits.

Moreover, said power supplied electronic circuits require a rise-to-working-level time of their supply voltage and this may cause delay in operation, in the event of closure of the differential switch on a pre-existing fault.

A drawback that is frequently experienced with this type of circuits utilizing a solids state switch upstream of the trip coil, is that the operating power supplied to said switch may be in a pulsating form with periodicity of 20 ms, if the network frequency if 50 Hz. As is known, a solid state switch will close upon receiving a triggering signal and open when current flowing therein is brought to zero.

Should a phase difference exist between the leakage current to earth and the network voltage such that the solid state switch closes a few milliseconds before the network voltage goes through zero, then the time during which the current is flowing in the trip coil would be insufficient for the contacts to open, and this would cyclically occur at each period of the network voltage, thereby causing operation of the differential switch to fail.

DE—A—2.015.415 discloses a control circuit for a differential switch as specified in the first part of the independent claim, in particular comprising a matching capacitor and a full-wave rectifier between the secondary winding of a toroidal transformer and a solid state switch, the matching capacitor and the secondary winding of the transformer constituting a resonant circuit at the network frequency.

The arrangement according to DE—A—2015415 does not obviate the drawbacks indicated above and the circuit is not protected against overvoltages and electromagnetic disturbances.

US—A—4.316.229 describes a low sensitivity electric current detector circuit designed to sense an earth-fault current greater than a threshold value of 0,5 amps, needing at least a current limiting resistor for limiting the current flowing in the circuit which comprises a diode bridge rectifier and a complex passive network arranged between the secondary winding of a transformer and a solid state switch.

US—A—4077055 discloses a differential switch including a passive network, consisting of an RC-series in parallel across a solid-state switch.

The differential switch control circuit according to this invention obviates to the drawbacks described above, it is a low-cost, highly reliable device, and allows use of a rather small core for its earth-fault responsive toroidal transformer, without requiring, otherwise, the use of an active electronic circuit.

The circuit according to the invention is characterised by the features described in the characterising portion of the independent claim.

The arrangement as claimed enables the circuit to respond to both unidirectional and chopped or pulsating, leakage currents, provides an appropriate operating time for triggering the solid state switch while obivating the drawbacks indicated above and protects the latter against overvoltages and electromagnetic disturbances.

The above and further features of the invention will be best understood when reading the following description in connection with the accompanying drawings which show, as a non restrictive example, a preferred embodiment of the invention.

In the drawings:

Figure 1 is a block diagram of the differential switch control circuit according to the invention; and

Figure 2 is a wiring diagram of the control circuit in figure 1, showing the different circuit components.

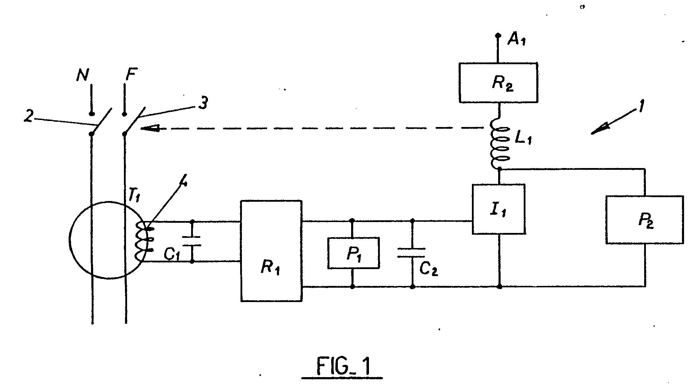

Reference will be made now to the above figures and first to figure 1, where the control circuit of the invention is designated by 1 as a whole.

F and N are the power network conductors. $T_1$ is a toroidal transformer designed to sense the existence of leakage currents to earth and to operate, via a circuit to be described herein below, a trip coil $L_1$ through a solid state switch $I_1$ to cause opening of movable contacts 2 and 3 in the power network. Said circuit that is interposed between the secondary 4 of transformer $T_1$ and the solid state switch $I_1$, consists of a capacitor $C_1$, a rectifier $R_1$, a passive network $P_1$, and second capacitor $C_2$, the functions of which are explained herein after, The trip coil $L_1$ is provided with its own supply of power $A_1$ that may be drawn out from the power network or an auxiliary source.

A second rectifier $R_2$ is arranged in the circuit section where the trip coil $L_1$ is placed. Provision of rectifier $R_2$ is necessary if the solid state switch $I_1$ is a SCR but not essential when the solid-state switch $I_1$ is a TRIAC.

Provided between the solid state switch $I_1$ and the trip coil, is a second passive network $P_2$ which performs the functions of preventing the circuit from being subjected to electromagnetic disturbances and protecting it against possible overvoltages. It is to be noted that because the circuit 1 is formed by passive components, the circuit is, in itself, little liable to disturbances.

The capacitor $C_1$ that is arranged right downstream of the secondary 4 of transformer $T_1$, is dimensioned so that it will attain a resonance, or near-to-resonance, condition with the inductance of secondary 4. In this way, indeed, a maximum power transfer is obtained downstream of the transformner $T_1$, which gives adequate voltage and current values for triggering the solid state swith $I_1$.

Correct dimensioning of the rectifier $R_1$ and, particularly, the passive network $P_1$ upstream of the solid state switch $I_1$, enables the circuit to respond to both unidirectional (dc-components) and chopped or pulsating leakage currents.

The capacitor $C_2$, when arranged as shown in the diagram, permits achievement of the desired operating time. Clearly, with a rather high capacitance $C_2$, delays of the order of the tens and even hundreds of milliseconds may be obtained for the operating time of the switch. This may be useful when a selectivity in operation is desired, i.e. when it is desired that the differential operations of an entire installation be coordinated.

Moreover, the capacitor $C_2$, provided it is of a proper value relatively to the features of the solid state switch, enables this latter to be at any time maintained in a closed condition, once the triggering condition is reached, thereby overcoming any problem of unfavourable difference of phase between the leakage current to earth and the network voltage, a drawback that is experienced with the electronic circuits mentioned above.

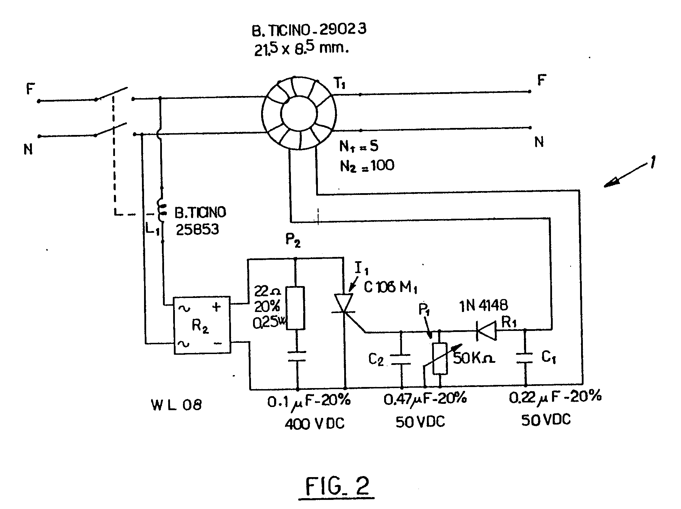

Referring now to the circuit diagram in figure 2 showing the different circuit components, given herein below are the principle values of said components for a corrent functioning of the circuit, the commercial symbols for some of them being given too.

In said diagram, the toroidal transformer $T_1$ is a $21.5 \times 8.5$ mm BTicino—29023 with $N_1$ (number of turns of the primary) = 5 and $N_2$ (number of turns the secondary) = 1000.

When such a transformer is used, in order to be able to work under near-to-resonance conditions, i.e. to have a maximum power transfer downstream of said transformer, the capacitor $C_1$ should have a cpacitance of 0.22 µF with 20% tolerance and 50 dcwV (director current working volts).

The rectifier $R_1$ is a 1 N 4148 diode. The passive network $P_1$ is a 50 KΩ potentiometer. $C_2$ is a 0,47 µF capacitance with 20% tolerance, and 50 dcwV. The solid state switch $I_1$ is a C106M1. The passive network $P_2$ is a RC-series: the resistance of a 22 Ω with 20% tolerance and 0.25 W maximum power dissipation; the capacitor is of 0.1 µF with 20% tolerance and 400 dcwV.

The rectifier $R_2$ is a WLO8 diode bridge. Finally, the trip coil $L_1$ is a BTicino 25853 trip coil.

Logically, the above values, that are the values for an optimal operation of the circuit, are at least in part related to one another and result from actual tests carried out. Thus, for example, the capacitance $C_1$ is calculated as a function of the size of the core of transformer $T_1$, the type of material from which it is made, and the number of turns in the secondary.

As a matter of fact, even though the values ascribed to the different circuit components are given as optimal values, they may be varied, when necessary, taking into account the mutual relationships.

**Claim**

A control circuit for a differential switch including a toroidal transformer (T1) for sensing a leakage current to earth, a matching capacitor (C1) connected to the secondary (4) of the toroidal transformer (T1) to provide a resonance or near-to-resonance condition with the inductance of said secondary (4), a diode rectifier (R1) for rectifying the current provided by said secondary (4) and a solid-state switch (I1) arranged to be triggered when the sensed leakage current is higher than a predetermined threshold value to operate thereby a trip coil (L1) which is supplied with power, and which opens the differential switch by acting upon movable contacts (2, 3), characterised in that it further includes a first passive network between said diode rectifier (R1) and said solid state switch, said first passive network consisting of a potentiometer (P1) and a further capacitor (C2) connected in parallel across the output of the diode rectifier (R1), and a second passive netowrk, consisting of a resistor and a capacitor in series, and arranged in parallel with said solid state switch (I1).

## Patentanspruch

Ein Steuerkreis für Differentialschalter, der einen Ringkerntransformator (T1) umfasst, der in der Lage ist, einen Kriechstrom zur Erde festzustellen, sowie einen Anpassungskondensator (C1), der verbunden ist mit der Sekundärwicklung (4) des Ringkerntransformators (T1) zur Bestimmung eines Resonanz-Zustandes oder der ResonanzNähe durch die Induktivität der Sekundärwicklung (4); eine Gleichrichter-Diode (R1) zum Gleichrichten des von der Sekundärwicklung (4) gelieferten Stroms und einen Festkörperschalter (I1), ausgelegt zur Betätigung, wenn der erhobene Kriechstrom eine vorgewählte Grenze uberschreitet, das heisst zur Steuerung einer gespeisten Auslösungsspule (L1), die den Differentialschalter öffnet, indem sie auf die beweglichen Kontakte (2, 3) einwirkt; Steuerkreis dadurch gekennzeichnet, dass er ausserdem ein erstes passives Netz zwischen der erwähnten Gleichrichter-Diode (R1) und dem genannten Festkörperschalter umfasst, wobei das erste passive Netz aus einem Potentiometer (P1) besteht und einem weiteren Kondensator (C2) in Parallelschaltung am Ausgang der Gleichrichter-Diode (R1), sowie ein zweites passives Netz mit einem Widerstand und einem Kondensator in Reihenschluss, parallel angeordnet zu dem genannten Festkörperschalter (I1).

## Revendication

Un circuit de commande pour interrupteurs différentiels comprenant un transformateur toroïdal (T1) apte à relever un courant de fuite vers la terre, un condenseur d'adaptation (C1) relié au secondaire (4) du transformateur toroïdal (T1) pour déterminer une condition de résonance ou proche de la résonance avec l'inductance dudit secondaire (4), une diode de redressement (R1) pour redresser le courant fourni par ledit secondaire (4) et un interrupteur à l'état solide (I1) disposé pour être actionné lorsque le courant de fuite relevé dépasse une valeur de seuil préétablie et commander de cette façon un bobine de décrochage (L1) alimentée, qui ouvre l'interrupteur différentiel en agissant sur des contacts mobiles (2, 3), caractérisé par le fait qu'il comprend ultérieurement un premier réseau passif entre ladite diode de redressement (R1) et ledit interrupteur à l'état solide, ce réseau passif étant formé d'un potentionmètre (P1) et d'un condensateur ultérieur (C2) relié en parallèle sur la sortie de la diode de redressement (R1), et un deuxième réseau passif comprenant un résistor et un condensateur en série, disposé parallèlement au dit interrupteur à l'état solide (I1).

FIG_1

B. TICINO - 29023
21,5 x 8,5 mm.

F     T₁     F

N     N₁ = S     N
    N₂ = 100

1

B.TICINO
25853

L₁

P₂

I₁

C 106 M₁

22 Ω
20%
0,25w

1N 4148

P₁

R₁

R₂

C₂

50 KΩ

C₁

W L 08

0,1 μF -20%
400 VDC

0,47 μF -20%
50 VDC

0,22 μF -20%
50 VDC

FIG. 2

0 108 726